Europäisches Patentamt

European Patent Office

Office européen des brevets

(11) Publication number: **0 108 844**
A1

## EUROPEAN PATENT APPLICATION

(21) Application number: **82306024.9**

(51) Int. Cl.³: **A 23 L 2/40**, A 23 L 2/38

(22) Date of filing: **11.11.82**

(43) Date of publication of application: **23.05.84**
Bulletin 84/21

(71) Applicant: **GENERAL FOODS CORPORATION, 250 North Street, White Plains, N.Y. 10625 (US)**

(72) Inventor: **Stahl, Howard Dave, 2 Claremont Road, Scarsdale N.Y. 10583 (US)**
Inventor: **Sorge, Richard Michael, 147, Stratford Place, Lakewood New Jersey 08701 (US)**

(74) Representative: **Baillie, Iain Cameron et al, c/o Ladas & Parry Isartorplatz 5, D-8000 München 2 (DE)**

(84) Designated Contracting States: **AT DE FR GB IT**

(54) **Carbonation composition.**

(57) Engel's salt provides a useful source of carbonation when utilized in a dry mix carbonated beverage compostion.

EP 0 108 844 A1

e 2757 C 1

DESCRIPTION

CARBONATION COMPOSITION

## Technical Field

This invention relates to carbonated beverages. More particularly, it relates to consumer or "at-home" preparation of carbonated beverages. This invention especially relates to the preparation of carbonated beverages with a dry mix composition.

## Background Art

Attempts to commercialize point of consumption or at-home preparation of carbonated beverages have not met with any lasting success over the years. The principal shortcoming of the several techniques has been that the consumer-prepared carbonated beverage has been significantly inferior in one or more aspects to the bottled or canned carbonated beverages available in stores and supermarkets. The most common complaints leveled at the carbonated beverage prepared by the consumer is that the quality and the quantity of the carbonation, the bubble size and the duration of the effervescence does not compare favorably with the commercially-available bottled carbonated beverage. On the other hand, there are significant advantages to consumer preparation of carbonated beverages vis-a-vis packaged liquid carbonated beverages. Thus, the use of glass, metal or other bulky containers is avoided, the necessity of bottling, shipping and storing carbonated beverages consisting of a major percentage of water is eliminated and the utility in terms of portability by the user is greatly enhanced. Thus, campers, backpackers, hunters, fishermen, outdoor spectators and travellers can enjoy a carbonated beverage without having to transport bulky and heavy quantities of the canned or bottled variety. Further, disposable and returnable cans and bottles would no longer be of major concern to environmentalists who have been seeking ways to conserve both the country's natural resources and natural beauty.

The prior art includes a significant number of dry compositions for use in preparing carbonated beverages at home. In most of these, a source of carbonate and acid, known in the art as a chemical "couple," is combined with sweeteners and a source of flavor so that upon addition of the composition to a glass of water, the "couple" reacts to yield carbon dioxide and at least some measure of carbonation to the beverage. Most chemical carbonation systems in the past have utilized sodium bicarbonate, potassium bicarbonate, ammonium bicarbonate or calcium carbonate, alone or in combination. Magnesium carbonate hydrates are stable under a carbon dioxide atmosphere but transform slowly in air to the basic carbonate $(Mg(OH)_2.4MgCO_3.5H_2O)$. This basic carbonate reacts slowly with acid to release carbon dioxide but imparts a brackish taste to the aqueous mixture. Due to the presence of the hydroxide, the carbonation efficiency of the basic salt is only about 80%. These facts obviously limit its utility in a chemical couple.

0108844

U.S. Patent No. 2,603,569 to Alther discloses the carbonation of a citric acid-sucrose complex with a sodium bicarbonate-sucrose complex. U.S. Patent No. 2,742,363 to Hughes claims a combination of an alkali metal bicarbonate and a sulfonic acid ion exchange resin in its hydrogen form. In U.S. Patent Nos. 2,851,359 and 2,953,459 to Diller, a highly soluble phosphate and a slowly soluble phosphate are combined with an alkali metal or ammonium carbonate or bicarbonate to prolong the ebullition of the beverage. U.S. Patent No. 3,241,977 to Mitchell, et al discloses chemical carbonation with citric, adipic or tartaric acid in finely divided form and which is said to approximate the carbonation sensation of cola-type beverages sold in airtight bottles or cans which are produced by a saturated solution containing several volumes of carbon dioxide. U.S. Patent No. 3,441,417 to Feldman, et al discloses a dry beverage composition adapted to be reconstituted with water to an effervescent beverage which includes as an essential carbonating ingredient, an organic compound having a carbonic acid anhydride group which is capable of controlled hydrolysis in water to release carbon dioxide at a substantially uniform rate. U.S. Patent No. 3,667,962 to Fritzberg, et al discloses a carbonation composition utilizing two distinct bodies formed from an aqueous solution of a saccharide, one contains an edible food acid and the other an edible bicarbonate. Upon addition to water, the tablets dissolve quickly and react to evolve carbon dioxide.

Many of the dry powder chemical couples have a common and acknowledged defect, an unpleasant taste in the beverage directly resulting from the components of the powder. This taste or after-taste has

0108844

- 4 -

been variously described as salty or brackish. Another criticism of the dry mix chemical couples is that the degree of beverage carbonation they produce is often significantly less than that of bottled carbonated beverages.

Some success in improving the flavor of carbonated beverages prepared with chemical couples has been achieved by employing a mixture of carbonate or bicarbonate salts but this has not eliminated the salty off-taste.

Despite many attempts to develop dry mix carbonation compositions for the preparation of carbonated beverages in the home or at the point of consumption, none have achieved significant commercial success.

It is, therefore, an object of this invention to provide a dry mix carbonation composition containing a chemical couple for point of consumption preparation of carbonated beverages which provides a significant degree of carbonation and a clean tasting beverage.

## DISCLOSURE OF THE INVENTION

In accordance with the present invention, it has been found that a significant improvement in the flavor produced in a carbonated beverage by a chemical couple can be achieved by employing Engel's salt as a source of carbonate in the chemical couple. More particularly, this invention is directed to a dry carbonated beverage mix composition containing a chemical couple which comprises an effective amount of an edible acid and an effective amount of Engel's salt.

This invention is also directed to a process of carbonating an aqueous liquid which comprises contacting an aqueous liquid with a chemical couple comprising an effective amount of an edible acid and an effective amount of Engel's salt.

## BEST MODE FOR CARRYING OUT THE EMBODIMENTS

In accordance with the practice of this invention, Engel's salt is utilized as a source of carbonate in a chemical couple which acts as a source of carbonation in producing a carbonated beverage. In formulating a dry beverage mix, Engel's salt may constitute the only source of carbonate or it may be combined with one or more carbonates or bicarbonates to supplement the action of these materials.

Engel's salt is a complex or double salt of magnesium carbonate and potassium bicarbonate and is presented by the formula: $MgCO_3 \cdot KHCO_3 \cdot 4H_2O$. This salt is an intermediate product obtained in the production of potassium carbonate by Engel's magnesia-potash process. Magnesium carbonate is suspended in a saturated solution of potassium chloride and the mixture is saturated with carbon dioxide. A crystalline double salt, known as Engle's salt, precipitates from the solution. $3(MgCO_3 \cdot 3H_2O) + 2KCl + CO_2 = MgCl_2 + 2(MgCO_3 \cdot KHCO_3 \cdot 4H_2O)$. Potassium carbonate may be obtained by treating Engel's salt with water above 140°C under pressure. Carbon dioxide is evolved, magnesium hydroxide is precipitated and the potassium carbonate product remains in solution. (See 4 Mellor, A Comprehensive Treatise on Inorganic and Theoretical Chemistry, 369 (Longmans, Green & Co., Ltd., 1929); Ephraim, Inorganic Chemistry, 822 (5th ed, 1948).

In the practice of this invention, a dry beverage mix, containing Engel's salt as part of a chemical couple, is combined with a quantity of water to produce a carbonated beverage. This permits point of consumption preparation of carbonated beverages utilizing the usual serving pitchers or glasses which are available in the home. The use of special preparation equipment such as a closed pressure vessel, is not required.

The Engel's salt utilized in this invention may be prepared by practicing the Engel process and recovering the intermediate salt. Thus, magnesium carbonate can be added to a solution of potassium chloride and then carbon dioxide can be introduced into the aqueous mixture until Engle's salt precipitate out. An alternative procedure which may be employed involves combining an aqueous solution of magnesium chloride with an aqueous solution of potassium bicarbonate and potassium carbonate. A white gel forms which, upon standing, releases carbon dioxide producing Engel's salt as a granular precipitate. In either of these procedures, the precipitate can be filtered, air dried and milled to produce desired particle size.

We have found that high reaction or carbonation rates are obtained where the Engel salt crystals are reduced in size using suitable milling techniques. We prefer an Engel salt carbonation source have a particle size below 100 mesh U.S. standard sieve, preferably a major amount through 200 mesh. The reaction between the Engel salt and acid is a heterogenious one (i.e., a solid carbonate reacting with soluble acid) and depends on the surface area (Particle size) available for reaction.

The dry beverage mixes to which this invention is directed permits the preparation of a carbonated beverage by the consumer. These mixes are usually prepared in a variety of flavors, including cola, ginger ale, root beer and numerous fruit flavors. These compositions, as is known in the art, contain a sweetening agent, flavoring, coloring and, to provide the desired carbonation, a chemical couple.

The chemical couple consists of a source of edible acid and edible carbonate. Upon the addition of water, the couple reacts to yield carbon dioxide and provides carbonation to the water. Anhydrous citric acid is the usual edible acid employed although other anhydrous acids such as adipic, tartaric, and malic acids and the the like, as well as other known edible acid sources may be employed.

Engel's salt serves as a source of edible carbonate in the dry carbonated beverage mix compositions of the present invention. Engel's salt may constitute the sole carbonate source or it may be combined with one or more other known sources of carbonate which supplement the contribution of the Engel's salt. Edible carbonate sources which may be employed with the Engel's salt include the alkali metal, alkaline earth metal and ammonium carbonates and bicarbonates. Sodium carbonate or bicarbonate, potassium carbonate or bicarbonate and calcium carbonate or bicarbonate are the most commonly employed sources of carbonate of the chemical couples employed heretofore and are preferred here.

Since the particle size of the components of the chemical couple influence the rate of reaction and hence the time to produce the carbonated beverage, large particle sizes should be avoided and ideally both the acid and the carbonate components should be of small particle size. The sweetening agent should be dry, non-hydroscopic and readily dissolved.

The sweetening agent or sweetner which may be usefully employed in the compositions of the present invention is of two general types: natural or nutritive and synthetic or non-nutritive. The natural or nutritive sweeteners include sucrose, dried corn syrups, anhydrous or low moisture dextrose and the like. Saccharin is the synthetic, non-nutritive sweetener which is widely used in the preparation of low-calorie carbonated beverages. In preparing the compositions of this invention, any of the natural sugars may be utilized, alone or in combination. Similarly, saccharin, aspartyl phenylalanine methyl ester (APM) or other sweeteners may be employed alone or in combination. The products of this invention may be prepared, therefore, in a "regular" or a "low-calorie" formulation. Where small quantities of synthetic or non-nutritive sweeteners are employed, these materials may be bulked with a suitable carrier such as dextrin to aid in separating particles of carbonate mixed therewith in the beverage which in turn improves the rate of carbonation.

Since the visual appeal of a carbonated beverage is influenced by its color, it is desirable to incorporate natural or synthetic coloring into the dry mixes of this invention. Natural coloring is obtained from natural fruits, such as strawberries, cherries, grapes, citrus fruit, from beets and other vegetables and the like. Synthetic coloring is also available for beverage use. These colorings are available commercially for incorporation into foodstuffs. The choice will be dependent on the effect desired and is usually dictated by the flavoring employed.

The flavoring incorporated into the dry mixes of the present invention may be selected from those which are employed in the carbonated beverage industry and are available commercially. These include such well known and popular flavors as cola, root beer, cream, ginger ale, etc. and such fruit flavors as orange, cherry, lemon-lime, grape and the like.

The ingredients which are used to prepare the compositions of this invention should have very low free moisture contents. Free moisture would cause the components of the chemical couple to react releasing carbon dioxide. After the dry mix containing Engel's salt is formulated, it can be stored until it is desired to prepare a carbonated beverage. However, since moisture will cause carbon dioxide to be released from the dry mix, appropriate storage conditions must be employed. Efficient storage may be provided by maintaining the dry mix under substantially anhydrous conditions. This may require a variety of storage containers which to some extent, at least, will be contingent on the ultimate end use and the quantity of carbonated beverages to be prepared from the Engel's salt dry mix. Thus, for example, the composition of this invention could be packaged in moisture-proof foil packages of various sizes so as to permit the consumer to prepare a single glass or a larger quantity of carbonated beverage. In addition, the dry mix may be packaged in a re-sealable metal can under anhydrous or inert gas atmosphere to provide the consumer with an economy-size package.

A carbonated beverage may be prepared in accordance with the practice of this invention by placing a quantity of the dry mix composition containing the Engel's salt-acid couple in an appropriate container and adding a quantity of water. The water employed can be any type of potable water available to the consumer. Household tap water, bottled water, fresh drinking water from a campsite stream and the like are examples of water available for point of consumption preparation of carbonated beverages with the compositions of this invention. The water should be clear, colorless, odorless and free of water-born organisms and sediment. Water containing suspended solids does not carbonate rapidly and beverages prepared from water of this quality may gush and become flat in a short time and thus, ideally, water of this nature should not be employed.

It is apparent that carbonated beverages of such familiar flavors as cola, root beer, lemon-lime, orange, cream, etc. can be prepared in the home or at other appropriate locations of the consumer's choice with the compositions of this invention. Only the availability of a particular flavored dry mix and the consumer's individual taste preferences limit the variety of carbonated beverages which may be prepared in accordance with the process of the present invention.

The carbonated beverages prepared from dry mixes which contain Engel's salt in accordance with the claimed invention provide the consumer with a significant degree of carbonation and a taste from which the salty or brackish taste frequently ascribed to chemical couples is absent. The taste delivered by this Engel's salt containing chemical couple has been described as clean and pleasant.

The following examples will serve to illustrate the subject invention.

- 11 -

## EXAMPLE I

Engel's salt was prepared in the following manner:

25.6 g. of magnesium chloride ($MgCl_2 \cdot 6H_2O$) were dissolved in 10 ml. of water and cooled to room temperature. 20 g. of potassium bicarbonate ($KHCO_3$) and 14 g. of potassium carbonate ($K_2CO_3$) were dissolved in 100 ml. of water. The magnesium chloride solution was added to the potassium salt solution. A white gel formed which, on standing, released carbon dioxide producing a granular precipitate. The precipitate was permitted to remain in the solution overnight. The next day the precipitate was removed by filtration on a Buchner funnel and air dried. The dried crystals recovered weighed 31 g. Chittick analysis of the crystals indicated a carbon dioxide content of 33.1% by weight as compared to a theoretical value of 34.3%. The dried crystals were milled in a "Mikro-Samplmill," manufactured by Pulverizing Machinery, part of United States Filter Corporation, 10 Chatham Road , Summit, New Jersey 07901, fitted with a 0.010 inch herringbone slot mesh screen insert.

## EXAMPLE 2

A number of dry mix beverage carbonation formulations were prepared and evaluated. For each run, all of the ingredients, except citric acid, were combined. Then cold water was added and, finally, citric acid was introduced. Table I, below, presents the formulations and the resulting volumes of carbonation.

0108844

- 13 -

TABLE I

| Run No. | 1 | 2 | 3 | 4 | 5 |
|---|---|---|---|---|---|
| Formulation, Grams | | | | | |
| Sugar | 109.650 | 109.650 | 109.650 | 109.650 | 109.650 |
| $CaCO_3$ | 3.486 | 1.743 | 2.400 | 2.400 | 3.486 |
| $KHCO_3$ | 4.815 | 4.815 | 3.424 | 3.424 | 4.815 |
| Engel's Salt | --- | 2.300 | 2.666 | 5.333 | 5.333 |
| Cherry flavor | 0.200 | 0.200 | 0.200 | 0.200 | 0.200 |
| Red coloring | 0.096 | 0.096 | 0.096 | 0.096 | 0.096 |
| Citric acid | 10.910 | 11.21 | 11.56 | 14.49 | 16.778 |
| Carbonation, volumes[1] | 2.0 | 2.0 | 2.0 | 2.5 | 3.0 |

[1]Carbonation is measured in terms of volumes and is defined as the volume of $Co_2$, measured at 1 atmosphere and 15°C., dissolved per volume of carbonated beverage.

The beverages of Run Nos. 1 and 5 formed precipitates of calcium when permitted to remain overnight. The Run No. 2 beverage was selected from the five beverages by a test panel as having the "cleanest" flavor and a satisfactory degree of carbonation. The "Clean" taste provided by the Engel's salt, a double salt of magnesium carbonate and potassium bicarbonate, was quite surprising since chemical couples containing basic magnesium carbonate impart a brackish taste and haze to a carbonated beverage. These mixed salt formulations contining Engel's salt produce clear carbonated beverages having a significantly less salty character than those prepared from other mixed salt chemical couples.

0108844

- 14 -

<u>CLAIMS</u>

1. A dry, carbonated beverage mix composition which comprises edible acid and Engel's salt.

2. A composition according to Claim 1 including a sweetener, coloring, flavoring or mixtures thereof.

3. A composition according to Claim 2 wherein the sweetener comprises sucrose, corn syrup, dextrose, saccharin, aspartyl phenylalanine methyl ester or mixtures thereof.

4. A composition according to Claims 1 or 2 wherein the effective amount of Engel's salt is supplemented by an edible carbonate and/or bicarbonate.

5. A composition according to Claim 4 wherein a major amount of the mixture of Engel's salt, carbonate and/or bicarbonate is potassium bicarbonate.

6. A process of carbonating an aqueous liquid which comprises contacting an aqueous liquid with a chemical couple comprising an effective amount of an edible acid and an effective amount of Engel's salt.

7. A process according to Claim 6 wherein the aqueous liquid is additionally contacted with an effective amount of sweetener, coloring, flavoring or mixtures thereof.

8. A process according to Claim 6 wherein the sweetener comprises sucrose, corn syrup, dextrose, saccharin, aspartyl phenylalanine methyl ester or mixtures thereof.

9. A process according to Claims 6 or 7 wherein the effective amount of Engel's salt is supplemented by an edible carbonate and/or bicarbonate.

10. A process of carbonating an aqueous liquid either by the glass or in a closed container which comprises contacting the aqueous liquid with Engel's salt, potassium bicarbonate, calcium carbonate and edible acid.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | US-A-3 667 962 (E.L. FRITZBERG et al.)<br>* Column 4, example 1; claims 1, 3, 8 * | | A 23 L   2/40<br>A 23 L   2/38 |
| | --- | | |
| D,A | US-A-3 441 417 (J.R. FELDMAN et al.)<br>* Claims 1, 10 * | | |
| | --- | | |
| A | CH-A- 428 410 (CHUGAI SEIYAKU K.K.)<br>* Column 2, examples; claim * | | |
| | ----- | | |
| | | | **TECHNICAL FIELDS SEARCHED (Int. Cl. ³)** |
| | | | A 23 L   2/38<br>A 23 L   2/40 |

The present search report has been drawn up for all claims

| Place of search | Date of completion of the search | Examiner |
|---|---|---|
| BERLIN | 22-06-1983 | SCHULTZE D |